# EUROPEAN PATENT APPLICATION

(11) **EP 4 661 201 A1**
(43) Date of publication of application: **10.12.2025**
(21) Application number: 24749971.8
(22) Date of filing: 18.01.2024
(51) Int. Cl.: H01M 50/586, H01G 11/18, H01G 11/80, H01M 50/152, H01M 50/184, H01M 50/545, H01M 50/593

(54) **POWER STORAGE DEVICE**

(30) Priority: 31.01.2023 JP 2023013385
(71) Applicant: Panasonic Intellectual Property Management Co., Ltd., Kadoma-shi, Osaka 571-0057 (JP)
(72) Inventor: KATO, Yudai, Kadoma-shi, Osaka 571-0057 (JP)
(74) Representative: Eisenführ Speiser
(86) International application number: PCT/JP2024/001204
(87) International publication number: WO 2024/162017

(57) **Abstract**

This power storage device (10) is equipped with: an electrode body (14) which comprises a positive electrode plate (11) and a negative electrode plate (12); an electrolyte; an outer can (20) which is equipped with a floor, has a cylindrical shape, is electrically connected to the negative electrode plate (12), and houses the electrode body (14) and the electrolyte therein; an opening-sealing body (30) which is electrically connected to the positive electrode plate (11) and blocks an opening in the outer can (20); a negative electrode cap (21) which is electrically connected to the outer can (20) and is provided above the outer can (20) in the axial direction P; and a gasket (33) provided between the outer can (20) and the opening-sealing body (30). Therein, a magnet (51) is provided between the negative electrode cap (21) and the opening-sealing body (30).

## Description

### TECHNICAL FIELD

The present disclosure relates to a power storage device.

### BACKGROUND ART

In the power storage device, a sealing assembly that blocks an opening portion of an outer can is swagged and fixed to the opening portion of the outer can via a gasket. Alternatively, it is sometimes swagged and fixed to the opening portion of the outer can via insulating coat instead of the gasket (e.g., Patent Literature 1).

### CITATION LIST

### PATENT LITERATURE

PATENT LITERATURE 1: Japanese Patent No. 6345763

### SUMMARY

Incidentally, the power storage device is required to have a high energy density. As the energy density of the power storage device increases, the demand for the safety of the power storage device also increases accordingly.

Accordingly, it is an advantage of the present disclosure to provide a power storage device that can improve the safety.

The power storage device according to the present disclosure comprises: an electrode assembly that includes a first polar plate and a second polar plate; an electrolyte; an outer can that has a closed-bottom cylindrical shape, houses the electrode assembly and the electrolyte, and is electrically connected to the second polar plate; a sealing assembly that blocks an opening portion of the outer can, and is electrically connected to the first polar plate; a second terminal that is provided on one side of the outer can in an axial direction, and is electrically connected to the outer can; and a first insulating member provided between the outer can and the sealing assembly, wherein a magnet is provided between the second terminal and the sealing assembly.

According to the power storage device in the present disclosure, the safety can be improved.

### BRIEF DESCRIPTION OF DRAWING

FIG. 1 is a schematic sectional view showing a power storage device that is an example of an embodiment.
FIG. 2 is a schematic sectional view showing magnets that correspond to an example of the embodiment.
FIG. 3 is a schematic sectional view showing magnets that correspond to another example of the embodiment.
FIG. 4 is a schematic sectional view showing magnets that correspond to another example of the embodiment.

### DESCRIPTION OF EMBODIMENTS

An example of an embodiment of the present disclosure is described in detail below. In the following description, specific shapes, materials, directions, numerical values and the like are examples to facilitate understanding of the present disclosure, and can be changed as appropriate depending on the application, purpose, specifications and the like.

### [Power Storage Device]

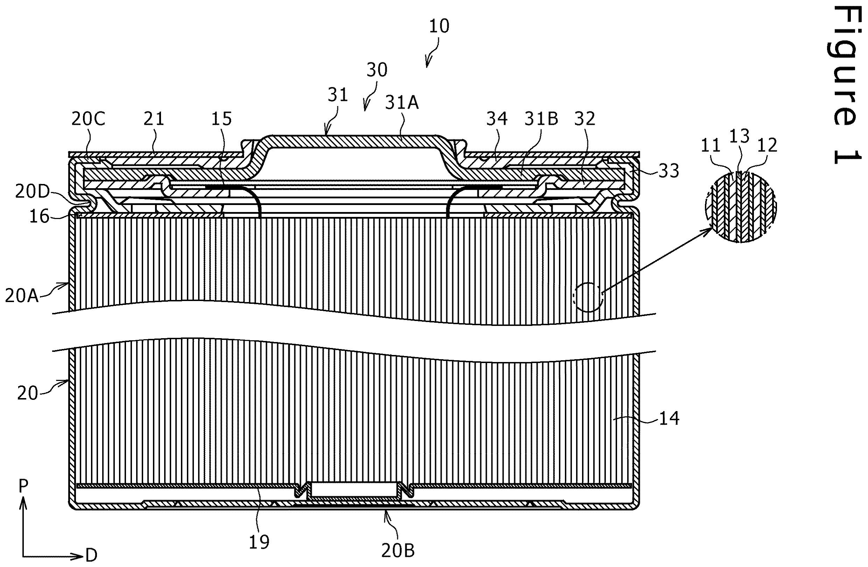

Referring to FIG. 1, a power storage device 10 that is an example of an embodiment is described.

The power storage device 10 is used as, for example, a power source of an electric vehicle. However, the power storage device in the present disclosure is not limited to the power source of an electric vehicle, and may be used as, for example, a power source of motor-driven electric equipment, such as an electric tool, an electric-assisted bicycle, an electric motorcycle, an electric wheelchair, an electric tricycle, an electric cart or the like. The power storage device in the present disclosure may be used as, for example, a power source for various types of electric equipment that are used indoors and outdoors, such as a cleaner, a radio, a lighting device, a digital camera, a video camera or the like.

The power storage device 10 comprises: a wound-type electrode assembly 14 where a positive electrode plate 11 as a first polar plate, and a negative electrode plate 12 as a second polar plate are wound together, with a separator 13 intervening therebetween; an outer can 20 that accommodates the electrode assembly 14; and a sealing assembly 30 that blocks an opening of the outer can 20. The outer can 20 houses electrolytic solution along with the electrode assembly 14. The electrolytic solution in the present embodiment is non-aqueous electrolytic solution, but may be aqueous electrolytic solution. The power storage device may be a capacitor or the like.

In the following, each member is sometimes described using an axial direction P, a circumferential direction R, and a radial direction D. For convenience of description, it is sometimes described assuming that in the axial direction P, a side on which the sealing assembly 30 is provided is an upper side, and a side on which a bottom portion 20B of the outer can 20 is formed is a lower side.

The positive electrode plate 11, the negative electrode plate 12, and the separator 13 are strip-shaped elongated bodies, and spirally wound. The composite agent layer of the negative electrode plate 12 may be formed to have a dimension one size larger than the composite layer of the positive electrode plate 11 in order to prevent lithium from depositing. That is, the composite layer of the negative electrode plate 12 may be formed longer than the composite agent layer of the positive electrode plate 11 in the longitudinal direction and the width direction (transverse direction). The separator 13 is formed to have a dimension at least one size larger than the positive electrode plate 11. For example, two separators 13 are disposed so as to sandwich the positive electrode plate 11. Note that in the power storage device in the present disclosure, the electrode assembly 14 is not necessarily wound.

The positive electrode plate 11 includes a positive electrode core body, and a positive electrode composite agent layer formed on at least one surface of the core body. The positive electrode core body may be made of, for example, metal foil that is stable in the potential range of the positive electrode plate 11, such as of aluminum or an aluminum alloy, a film on which the metal is disposed as the surface layer, or the like. Preferably, the positive electrode composite agent layer contains, for example: a positive-electrode active material; a conductive agent, such as acetylene black; and a binding agent, such as polyvinylidene fluoride, and is formed on each of the opposite surfaces of the positive electrode core body. For example, lithium transition metal composite oxide is used as the positive-electrode active material.

The negative electrode plate 12 includes a negative electrode core body, and a negative electrode composite agent layer formed on at least one surface of the core body. The negative electrode core body may be made of, for example, metal foil that is stable in the potential range of the negative electrode plate 12, such as of copper or a copper alloy, a film on which the metal is disposed as the surface layer, or the like. Preferably, the negative electrode composite agent layer contains, for example, a negative-electrode active material, and a binding agent such as styrene-butadiene rubber (SBR), and is formed on each of the opposite surfaces of the negative electrode core body. For example, graphite, a siliconcontaining compound or the like is used as the negative-electrode active material.

The non-aqueous electrolyte housed in the outer can 20 contains a non-aqueous solvent, and electrolyte salt dissolved in the non-aqueous solvent. The non-aqueous solvent may be, for example, any of esters, ethers, nitriles, or amides, a composite solvent of two or more of them, and the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF₆. Note that the non-aqueous electrolyte may be gel electrolyte, solid electrolyte or the like instead of the electrolytic solution.

A positive electrode lead 15 that extends from the axial-direction-P upper end of the electrode assembly 14, and connects the positive electrode plate 11 included in the electrode assembly 14 and the current collector plate 32 of the sealing assembly 30 to each other, and an upper insulating plate 16 disposed between the electrode assembly 14 and the sealing assembly 30 are provided above the electrode assembly 14. The positive electrode lead 15 electrically connects the positive electrode plate 11 and the sealing assembly 30 to each other. Accordingly, the positive electrode cap 31 of the sealing assembly 30 functions as a positive electrode external terminal that is a first electrode external terminal. The upper insulating plate 16 prevents the positive electrode plate 11 and the positive electrode lead 15 from coming into contact with the outer can 20.

Under the electrode assembly 14 there is provided a negative electrode current collector plate 19. A negative electrode core exposed portion (not shown) provided with no negative electrode composite agent layer in the negative electrode core material protrudes on the lower side of the negative electrode plate 12 in the axial direction P (not shown). The negative electrode core exposed portion is formed from an end of the elongated negative electrode plate 12 on a winding initiation side in the longitudinal direction (circumferential direction R) to an end of its winding completion side. The negative electrode core exposed portion is joined to the negative electrode current collector plate 19, and the negative electrode plate 12 and the negative electrode current collector plate 19 are electrically connected to each other. Furthermore, the negative electrode current collector plate 19 is joined to the inner surface of the bottom portion 20B of the outer can 20, and the negative electrode current collector plate 19 and the outer can 20 are electrically connected to each other.

The outer can 20 is a metal container that has a closed-bottom cylindrical shape with the upper end in the axial direction P being open. The outer can 20 is typically made of metal, with iron as the principal component, but may be made of metal, with aluminum or the like as the principal component, in a case where the positive electrode plate 11 is connected. The outer can 20 includes: a cylindrical portion 20A that is formed to have a cylindrical shape; a bottom portion 20B that has a circular shape in bottom view; a shoulder portion 20C that is formed to have a ring shape along the circumferential direction R of the outer can 20 at the opening end of the cylindrical portion 20A; and a grooved portion 20D that is formed along the circumferential direction R of the cylindrical portion 20A. The outer can 20 is provided with a negative electrode cap 21 that is a second electrode external terminal (negative electrode external terminal).

The grooved portion 20D is formed adjacent to the opening of the outer can 20 at a position apart from the shoulder portion 20C by a predetermined length. The grooved portion 20D is a portion that is part of the cylindrical portion 20A projecting to the inside of the outer can 20, and is formed by applying a spinning process to the cylindrical portion 20A from the outside, for example. Note that at the position where the grooved portion 20D is formed, the outer can 20 has a reduced diameter, and a narrow-lined groove is formed in the outer-peripheral surface of the cylindrical portion 20A. Preferably, the grooved portion 20D has a substantially U-shaped section, and is formed to have a ring shape over the entire length in the circumferential direction R of the cylindrical portion 20A.

The negative electrode cap 21 is electrically connected to the negative electrode plate 12 via the outer can 20, and functions as a negative electrode external terminal. The negative electrode cap 21 may be made of metal, or be made of a nickel-plated steel plate. The negative electrode cap 21 is formed to have a ring shape that has an opening at a center portion in the radial direction D. The negative electrode cap 21 is welded to the shoulder portion 20C of the outer can 20, and is electrically connected to the outer can 20.

The sealing assembly 30 is formed to have a disk shape as a whole, and includes a positive electrode cap 31, a current collector plate 32, a gasket 33 as a first insulating member, and an insulating plate 34 as a third insulating member. The sealing assembly 30 is disposed above the grooved portion 20D of the outer can 20, and is fixed to the upper end portion of the outer can 20. In more detail, the shoulder portion 20C of the outer can 20 is bent inward in the radial direction D and swagged to the sealing assembly 30, the sealing assembly 30 is fixed to the upper end portion of the outer can 20 by the shoulder portion 20C and the grooved portion 20D of the outer can 20, and the sealing assembly 30 blocks the opening of the outer can 20.

The positive electrode cap 31 is electrically connected to the positive electrode plate 11 via the positive electrode lead 15 and the current collector plate 32, and functions as a positive electrode external terminal. The positive electrode cap 31 may be a disk-shaped metal member. For example, in view of presence or absence of magnetism, the positive electrode cap 31 may be a nickel-plated steel plate, an aluminum plate covered with a magnetic material, or the like. The positive electrode cap 31 includes: an elevated portion 31A whose center portion in the radial direction D protrudes to the outside of the power storage device 10; and a flange portion 31B formed around the elevated portion 31A. The positive electrode cap 31 is disposed on the upper surface side of the sealing assembly 30, and is exposed outside the outer can 20, thus forming a top surface of the power storage device 10. A positive electrode tab or the like of the current collector member of the power storage module is joined by welding to the elevated portion 31A.

The current collector plate 32 is electrically connected to the positive electrode plate 11 via the positive electrode lead 15, and functions as a positive electrode current collector plate. The current collector plate 32 is a metal member that has a diameter comparable to that of the positive electrode cap 31. The current collector plate 32 is formed to have a ring shape that has an opening at a center portion in the radial direction D. The current collector plate 32 is disposed closer to the electrode assembly 14 than the positive electrode cap 31. The current collector plate 32 is welded to the positive electrode cap 31, and is thus welded, for example, at a position closer to the outer peripheral edge of the positive electrode cap 31 than its center in the radial direction D.

The gasket 33 as the first insulating member is a rubber member or a plastic member that prevents the positive electrode cap 31 and the current collector plate 32 from coming into contact with the outer can 20, and secures the electrical insulation between the outer can 20 and the sealing assembly 30. The gasket 33 blocks the gap between the outer can 20 and the sealing assembly 30, and seals the inside of the power storage device 10. The gasket 33 is provided between the outer peripheral portion of the stacked body of the positive electrode cap 31 and the current collector plate 32, and the outer can 20. The gasket 33 covers the upper surface of the flange portion 31B of the positive electrode cap 31, the side surfaces of the positive electrode cap 31 and the current collector plate 32, and the lower surface of the current collector plate 32, at the outer peripheral portion of the stacked body.

The insulating plate 34 as the third insulating member is a rubber member, a plastic member, or a ceramic member for preventing contact between the positive electrode cap 31 and the negative electrode cap 21, and securing the electric insulation between the positive electrode cap 31 and the negative electrode cap 21. The insulating plate 34 is formed to have a ring shape that has an opening at a center portion in the radial direction D. Magnets 41 that are described later in detail are provided in the insulating plate 34.

### [Magnet]

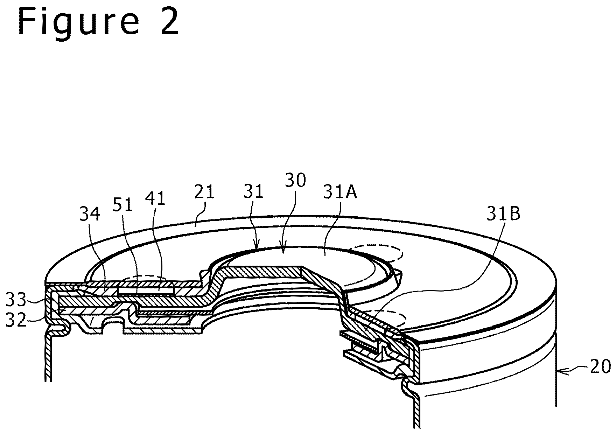

Referring to FIG. 2, the magnets 41 that is an example of the embodiment is described.

Each magnet 41 is a member that is a typical magnet that has a north pole and a south pole, and has a property of attracting a ferromagnet, such as of iron. What can at least allow the negative electrode cap 21 and the sealing assembly 30 to be magnetically attached thereto is selected as each magnet 41. Preferably, for example, a samarium cobalt magnet, or a neodymium magnet is used as each magnet 41. The magnets 41 are provided in the insulating plate 34 between the negative electrode cap 21 and the sealing assembly 30. For example, the magnets 41 in the present embodiment are formed into disk shapes, and are disposed substantially at 120°-intervals on the insulating plate 34 formed into a ring shape. Note that the shapes, number, and arrangement intervals of the magnets in the present disclosure are not limited to those of the magnets 41 in the present embodiment.

Insulating plates 51 each serving as a second insulating member having a higher heat resistance than the gasket 33 is provided between the magnets 41 and the sealing assembly 30. The insulating plates 51 are respectively formed into disk shapes with the same diameters as the magnets 41. The insulating plates 51 are disposed so as to entirely cover the lower surfaces of the respective magnets 41. The insulating plates 51 are, for example, ceramic members. Note that the insulating plates 51 may be provided between the magnets 41 and the negative electrode cap 21. In this case, the insulating plates 51 are disposed so as to entirely cover the upper surfaces of the respective magnets 41. Alternatively, the insulating plates 51 may be provided between the sealing assembly 30, and the magnets 41 and the negative electrode cap 21. Further alternatively, the magnets 41 may be entirely coated with the respective insulating plates 51. Note that the method of fixing the magnets to the insulating plates 34 is not specifically limited. For example, the magnets 41 may be pressed and inserted into the through-holes of the respective insulating plates 34.

In some cases, the power storage devices 10 may be connected in parallel and in series and may constitute a power storage module. In the power storage module, repetitive charge and discharge for a long time, or occurrence of micro internal short circuits possibly causes a certain power storage device 10 to be abnormally heated.

Here, as described above, the opening portion of the outer can 20 of the power storage device 10 is sealed by swaging the sealing assembly 30 via the gasket 33. The sealing assembly 30 at a positive electrode potential, and the outer can 20 at a negative electrode potential are electrically insulated from each other by the gasket 33. However, in case the gasket 33 is fused by heat generation or the like during thermorunaway of the abnormally heated power storage device 10, the sealing assembly 30 falls by gravity, and comes into contact with the grooved portion 20D of the outer can 20. This causes a possibility that the abnormally heated power storage device 10 enters a short-circuit state, the power storage device 10 is further heated, the power storage devices 10 or external circuits around the abnormally heated power storage device 10 are thermally affected.

According to the power storage device 10 of the present embodiment, even in case the gasket 33 is fused due to heat generation during thermorunaway, the magnetic attachment of the sealing assembly 30 to the negative electrode cap 21 by the magnets 41 prevents the sealing assembly 30 from falling by gravity and coming into contact with the grooved portion 20D of the outer can 20. This prevents the short-circuit state from being maintained, and prevents current from flowing into the power storage devices 10 arranged in parallel. Thus, there is no concern about the fire spreading. As a result, the safety of the power storage device 10 can be improved.

The insulating plates 51 have a higher heat resistance than the gasket 33. Accordingly, even in case the gasket 33 is fused by heat generation during thermorunaway, the insulating plates 51 are resistant to fusing and the like, and the electric insulation between the magnets 41 and the sealing assembly 30 can be easily maintained. Accordingly, the power storage device 10 is resistant to short circuits, which can improve the safety of the power storage device 10.

### [Another Embodiment]

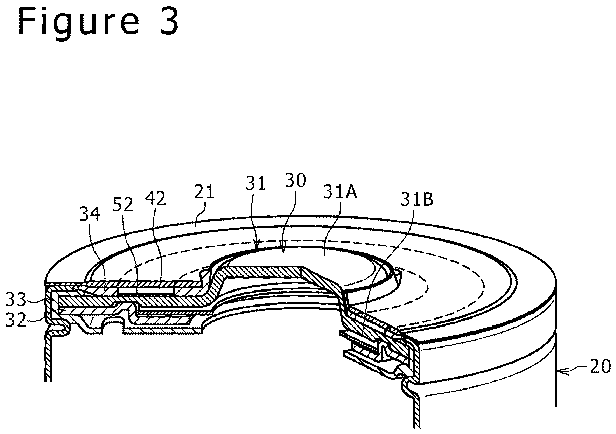

Referring to FIG. 3, magnets 42 that correspond to another example of the embodiment are described. The configuration other than that of the aforementioned magnets 41 is described below. The description of the configuration and advantageous effects similar to those of the aforementioned magnets 41 is omitted.

The magnets 42 in the present embodiment are formed into ring shapes. In more detail, each magnet 42 is formed into a ring shape that has a larger inner diameter than the insulating plate 34, and has a smaller external diameter than the insulating plate 34. In other words, each magnet 42 is formed to have a smaller size in the radial direction D than the size of the insulating plates 34 in the radial direction D.

Insulating plates 52 each serving as a second insulating member having a higher heat resistance than the gasket 33 are provided between the magnets 42 and the sealing assembly 30. Each insulating plate 52 is formed into a ring shape that has the same inner diameter and external diameter as the corresponding magnet 42. The insulating plates 52 are disposed so as to entirely cover the lower surfaces of the respective magnets 42. The insulating plates 52 are, for example, ceramic members. Note that the insulating plates 52 may be provided between the magnets 42 and the negative electrode cap 21. In this case, the insulating plates 52 are disposed so as to entirely cover the upper surfaces of the respective magnets 42. Alternatively, the insulating plates 52 may be provided between the sealing assembly 30, and the magnets 42 and the negative electrode cap 21. Further alternatively, the magnets 42 may be entirely coated with the respective insulating plates 52.

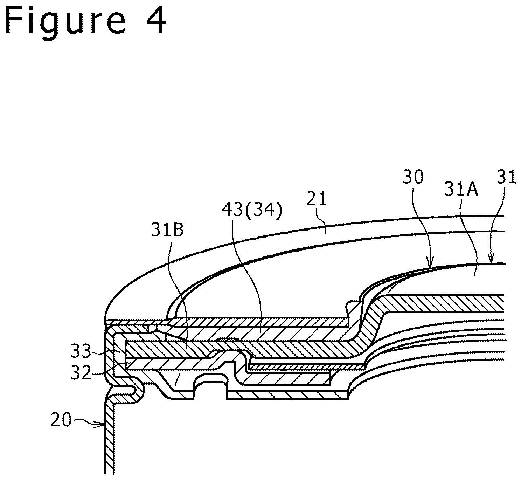

Referring to FIG. 4, a magnet 43 that is another example of the embodiment is described.

Instead of the aforementioned insulating plates 34, the magnet 43 in the present embodiment is provided between the negative electrode cap 21 and the sealing assembly 30. The magnet 43 contains an insulating material having a higher heat resistance than the gasket 33. The magnet 43 is, for example, a plastic magnet, and is a member made by mixing and molding magnetic powder and resin. The magnet 43 is formed into a ring that has an opening at the center portion in the radial direction D. The magnet 43 prevents the positive electrode cap 31 and the negative electrode cap 21 from coming into contact, and secures the electric insulation between the positive electrode cap 31 and the negative electrode cap 21.

Note that the present disclosure is not limited to the aforementioned embodiments and their modified examples, and it is a matter of course that various change and improvement can be made in a range of the items described in the claims of the present application.

### REFERENCE SIGNS LIST

10 Power storage device, 11 Positive electrode plate (first polar plate), 12 Negative electrode plate (second polar plate), 13 Separator, 14 Electrode assembly, 15 Positive electrode lead, 16 Upper insulating plate, 19 Negative electrode current collector plate, 20 Outer can, 20A Cylindrical portion, 20B Bottom portion, 20C Shoulder portion, 20D Grooved portion, 21 Negative electrode cap, 30 Sealing assembly, 31 Positive electrode cap, 31A Elevated portion, 31B Flange portion, 32 Current collector plate, 33 Gasket (first insulating member), 34 Insulating plate (third insulating member), 41 Magnet, 42 Magnet, 43 Magnet, 51 Insulating plate (second insulating member), 52 Insulating plate (second insulating member)

## Claims

1. A power storage device, comprising: an electrode assembly that includes a first polar plate and a second polar plate; an electrolyte; an outer can that has a closed-bottom cylindrical shape, houses the electrode assembly and the electrolyte, and is electrically connected to the second polar plate; a sealing assembly that blocks an opening portion of the outer can, and is electrically connected to the first polar plate; a second terminal that is provided on one side of the outer can in an axial direction, and is electrically connected to the outer can; and a first insulating member provided between the outer can and the sealing assembly, wherein
a magnet is provided between the second terminal and the sealing assembly.

2. The power storage device according to Claim 1, wherein
a second insulating member that has a higher heat resistance than the first insulating member does is provided between the second terminal and the magnet or between the magnet and the sealing assembly.

3. The power storage device according to Claim 2, wherein
a third insulating member is provided between the second terminal and the sealing assembly, and
the second insulating member has a higher heat resistance than the third insulating member does.

4. The power storage device according to any one of Claims 1 to 3, wherein
the magnet is formed to have a ring shape.

5. The power storage device according to any one of Claims 1 to 3, wherein
a plurality of the magnets are provided at regular, predetermined angles.

6. The power storage device according to Claim 1, wherein
the magnet contains an insulating material that has a higher heat resistance than the first insulating member does.
